(19)

**Europäisches Patentamt**
**European Patent Office**
**Office européen des brevets**

(11) **EP 4 741 136 A1**

(12) **EUROPÄISCHE PATENTANMELDUNG**

(43) Veröffentlichungstag:
**13.05.2026 Patentblatt 2026/20**

(21) Anmeldenummer: **25214128.8**

(22) Anmeldetag: **06.11.2025**

(51) Internationale Patentklassifikation (IPC):
**B29C 48/08** (2019.01)    **B29C 48/88** (2019.01)
**B29C 48/00** (2019.01)    **B29C 48/305** (2019.01)
**B29C 48/50** (2019.01)

(52) Gemeinsame Patentklassifikation (CPC):
**B29C 48/08; B29C 48/305; B29C 48/914;**
**B29C 48/917;** B29C 48/0018; B29C 48/503;
B29C 48/919; B29L 2007/008

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH LA MA MD TN**

(30) Priorität: **08.11.2024 DE 102024132661**

(71) Anmelder: **Brückner Maschinenbau GmbH**
**83313 Siegsdorf (DE)**

(72) Erfinder:
• **EDFELDER, Anton**
**83246 Unterwössen (DE)**
• **GIAPOULIS, Anthimos**
**83278 Traunstein (DE)**

(74) Vertreter: **Flach Bauer & Partner**
**Patentanwälte mbB**
**Adlzreiterstraße 11**
**83022 Rosenheim (DE)**

(54) **CAST-VORRICHTUNG**

(57) Die vorliegende Erfindung betrifft eine Cast-Vorrichtung 14 und eine Anlage 10 zur Herstellung einer Folie. Die Cast-Vorrichtung umfasst eine Kühlwalze 142, eine Take-Off-Walze 144 und ein Wasserbad 150. Die Kühlwalze 142 ist dazu eingerichtet, eine auf ihre Oberfläche extrudierte Kunststoffschmelze abzukühlen um eine Folie F zu erzeugen. Die Take-Off-Walze 144 ist der Kühlwalze 142 nachgeschalten und dazu eingerichtet, die Folie F von der Kühlwalze 142 abzulösen. Die Kühlwalze ist zumindest teilweise in dem Wasserbad 150 angeordnet, sodass der Ablösepunkt P der Folie von der Kühlwalze 142 oberhalb der Wasserlinie des Wasserbads. Die Kühlwalze weist eine Walzenbreite $B_K$ und die Take-Off-Walze eine Walzenbreite $B_T$ auf, wobei die Walzenbreite $B_T$ der Take-Off-Walze 144 kleiner ist, als die Walzenbreite $B_K$ der Kühlwalze 142.

Fig. 2

EP 4 741 136 A1

**Beschreibung**

**Gebiet der Erfindung**

Die Erfindung betrifft eine Cast-Vorrichtung und eine Anlage zur Herstellung einer Folie, umfassend eine entsprechende Cast-Vorrichtung.

**Hintergrund**

Bei der Herstellung von dünnen Kunststofffolien wird zunächst eine Kunststoffschmelze extrudiert und auf eine Kühlwalze aufgebracht, auf der sie abkühlt und zumindest teilweise erstarrt (Cast-Folie). Um die extrudierte Folie bzw. Cast-Folie zu Kühlen und anschließend einer Reckanlage zuführen zu können, ist die Kühlwalze typischerweise so angeordnet, dass sie sich größtenteils unter Wasser befindet. Das Wasserbad führt zu einer homogenen und schnellen Kühlung.

Um die Cast-Folie von der Kühlwalze abzulösen, ist typischerweise eine sogenannte Take-Off-Walze vorgesehen. Die Take-Off-Walze ist der Kühlwalze nachgeschalten und dazu eingerichtet, die Folie von der Kühlwalze abzulösen. Der Ablösepunkt der Cast-Folie von der Kühlwalze liegt in der Regel über der Wasserlinie. Die abgelöste Folie kann anschließend durch ein weiteres Wasserbad geleitet und insbesondere einer Reckanlage, beispielsweise einer Längs- und/oder Querreckanlage oder Simultanreckanlage, zugeführt werden.

Liegt der Ablösepunkt der Cast-Folie von der Kühlwalze über der Wasserlinie, kann bei herkömmlichen Cast-Vorrichtungen weitestgehend sichergestellt werden, dass der Mittenbereich der Kühlwalze, welcher von der Cast-Folie bedeckt ist, trocken bleibt. Dies ist erforderlich, da Wasser, welches auf die Oberfläche der Kühlwalze gelangt sich zwischen die Kühlwalze und die erneut aufgebrachte Kunststoffschmelze legen würde.

Dies beeinträchtigt die Folienqualität und kann zusätzlich im weiteren Reckverfahren zu Folienrissen führen.

Zudem würde die heiße Kunststoffschmelze dazu führen, dass das Wasser zwischen der Schmelze bzw. Folie und der Kühlwalze verdampft. Die entstehenden Dampfblasen können die Folie schädigen oder sogar zerstören.

Ein allgemeiner Trend in der Kunststofffolienherstellung ist die Steigerung der Produktionsgeschwindigkeit. Dies hat zur Folge, dass auch die Oberflächengeschwindigkeit der Kühlwalze und der Take-Off-Walze gesteigert werden müssen. Dies kann durch eine höhere Winkelgeschwindigkeit und/oder durch größere Walzendurchmesser erreicht werden.

Aktuelle Anlagen für die Folienherstellung weisen eine Kühlwalzengeschwindigkeit von bis zu 120 m/min auf. Nach einer Längsverstreckung der Cast-Folie können so pro Minute etwa 500 bis 600 Meter Folie hergestellt werden.

Bei höheren Produktionsgeschwindigkeiten, beispielsweise 700 Meter Folie pro Minute, beträgt die Kühlwalzengeschwindigkeit bereits etwa 140 bis 150 m/min. Eine weitere Steigerung der Produktionsgeschwindigkeit (z.B. >800 m/min) führt zu einer entsprechenden Steigerung der Kühlwalzengeschwindigkeit.

Es zeigt sich, dass bei herkömmlichen Cast-Vorrichtungen die Kühlwalze und die Take-Off-Walze bereits ab Kühlwalzengeschwindigkeiten >120m/min erhebliche Mengen an Wasser verschleppen. Die Wasserverschleppung führt zu einer hohen Spritzwasserbildung. Die Spritzwasserbildung ist so stark, dass das Spritzwasser u.a. auf die Oberfläche der Kühlwalze trifft und, wie oben beschrieben, die Folienqualität beeinträchtigt.

**Beschreibung der Erfindung**

Es ist daher Aufgabe der vorliegenden Erfindung, eine verbesserte Cast-Vorrichtung und Anlage für die Folienherstellung bereitzustellen, welche auch bei hohen Produktionsgeschwindigkeiten (Folienausstoß > 600 m/min bzw. Kühlwalzengeschwindigkeit > 120 m/min) eine gute Folienqualität liefert.

Die Aufgabe wird durch eine Cast-Vorrichtung nach Anspruch 1, sowie durch die anspruchsgemäße Anlage zur Herstellung einer Folie gelöst. Weitere Aspekte der Erfindung sind in den abhängigen Ansprüchen, sowie in der nachfolgenden Beschreibung beschrieben.

Insbesondere wird die Aufgabe durch eine Cast-Vorrichtung zur Kunststofffolienherstellung gelöst. Die Cast-Vorrichtung umfasst zumindest eine Kühlwalze, eine Take-Off-Walze und ein Wasserbad.

Die Kühlwalze ist dazu eingerichtet, eine auf ihre Oberfläche extrudierte Kunststoffschmelze abzukühlen um eine Folie zu erzeugen. Die Take-Off-Walze ist der Kühlwalze in Folienlaufrichtung A nachgeschaltet und dazu eingerichtet, die Folie von der Kühlwalze abzulösen. Die Kühlwalze ist zumindest teilweise in dem Wasserbad angeordnet. Die auf die Kühlwalze extrudierte Kunststoffschmelze wird also mit der Kühlwalze durch das Wasserbad geführt und dabei abgekühlt. Die Kühlwalze kann ferner so angeordnet sein, dass ein Ablösepunkt der Folie von der Kühlwalze oberhalb der Wasserlinie des Wasserbads liegt. Ebenso ist es möglich, dass der Ablösepunkt der Folie von der Kühlwalze auf Höhe der Wasserlinie oder unter der Wasserlinie des Wasserbades liegt.

Ist der Ablösepunkt der Folie von der Kühlwalze oberhalb der Wasserlinie des Wasserbads, kann verhindert werden, dass Wasser zwischen die Kühlwalze und die Folie fließt.

Die Kühlwalze weist eine Walzenbreite $B_K$ und die Take-Off-Walze eine Walzenbreite $B_T$ auf. Die Walzenbreite $B_T$ der Take-Off-Walze ist kleiner als die Walzenbreite $B_K$ der Kühlwalze. Es gilt also die folgende Beziehung

$$B_K > B_T$$

Die Walzenbreite gibt dabei die Breite (in Axialrichtung der Walze gemessen) der Mantelfläche der Walze an, auf welcher die Schmelze, respektive die Folie, geführt wird. Achsstummel oder andere Teile der Walze, welche beispielsweise der Lagerung dienen haben keinen Einfluss auf die Walzenbreite.

Durch die gegenüber der Kühlwalze weniger breite Take-Off-Walze kann die Bildung von Spritzwasser signifikant reduziert werdend, denn aufgrund der reduzierten Breite wird durch die Take-Off-Walze weniger Wasser aus dem Wasserbad verschleppt. Mithin entstehen weniger Spritzer. Somit können hohe Produktionsgeschwindigkeiten bei der Folienherstellung erreicht werden, ohne die Folienqualität durch Wasserspritzer zu gefährden.

In einem Aspekt der Erfindung umfasst die Cast-Vorrichtung weiterhin eine Extrusionsdüse, welche dazu eingerichtet ist, die Kunststoffschmelze auf die Oberfläche der Kühlwalze mit einer Extrusionsbreite $B_s$ zu extrudieren. Die Extrusionsbreite $B_s$ gibt die minimale Breite der Kühlwalze vor. Beispielsweise kann die Breite der Kühlwalze $B_K$ im Bereich von 100% bis 120% der Extrusionsbreite $B_S$, oder im Bereich von 105% bis 115% der Extrusionsbreite $B_s$, oder im Bereich von 108% bis 112% der Extrusionsbreite $B_s$ liegen.

Die Walzenbreite $B_T$ der Take-Off-Walze kann gegenüber der Extrusionsbreite $B_s$ jedoch reduziert sein. Denn bei der Extrusion und der anschließenden Abkühlung der Kunststoffschmelze kommt es zu dem sogenannten Neck-in.

Der Neck-in bezeichnet die Differenz von Extrusionsbreite $B_s$ zur Folienbreite $B_F$ beim Ablösen von der Kühlwalze. Bei konstanten Material- und Prozessparametern, stellt sich typischerweise ein konstanter Neck-in ein.

Der Neck-in wird durch verschiedene Faktoren beeinflusst, darunter Materialeigenschaften, die Abzugsgeschwindigkeit (Geschwindigkeit der Kühlwalze), die Verarbeitungstemperatur und die Geschwindigkeit des Extrusionsprozesses. Insbesondere ist beim Neck-in auch das Abzugsverhältnis und der Abstand zwischen Extrusionsdüse und Kühlwalze ausschlaggebend.

Nachfolgend wird exemplarisch der Neck-in für einige gängige Materialien, die zur Folienherstellung verwendet werden angegeben. Der tatsächliche Neck-in ergibt sich dann aus den Prozessparametern.

| | |
|---|---|
| LDPE (Low-Density Polyethylen): | 5-20% der Extrusionsbreite |
| HDPE (High-Density Polyethylen: | 5-20% der Extrusionsbreite |
| LDPE (Linear Low-Density Polyethylen): | 5-15% der Extrusionsbreite |
| PP (Polypropylen): | 5-25% der Extrusionsbreite |
| PET (Polyethylenterephthalat): | 5-20% der Extrusionsbreite |
| PVC (Polyvinylchlorid): | 5-10% der Extrusionsbreite |
| PS (Polystyrol): | 5-20% der Extrusionsbreite |
| PA (Polyamid): | 5-15% der Extrusionsbreite |
| EVA (Ethylenvinylacetat) | 15-20% der Extrusionsbreite |

Die theoretische Folienbreite $B_F$ berechnet sich damit wie folgt:

$$B_F = B_S - \text{Neck-In}$$

Neben dem Material wird der Neck-In unter anderem durch die Schmelzviskosität und die Verarbeitungstemperatur beeinflusst. Dabei gilt, je niedriger die Viskosität des Materials (bzw. je höher die Verarbeitungstemperatur) desto höher der Neck-in.

Generell haben Materialien mit niedriger Schmelzviskosität wie LDPE, EVA oder Polystyrol einen höheren Neck-in, während Materialien mit höherer Viskosität wie PET, PA oder PVC geringere Werte aufweisen.

Das Phänomen des Neck-In kann bei der Wahl der Take-Off-Walzenbreite $B_T$ berücksichtigt werden. Mithin ist es möglich, dass die Walzenbreite $B_T$ im Bereich von 70 % bis 105 % der Extrusionsbreite, oder im Bereich von 75% bis 100% der Extrusionsbreite, oder im Bereich von 80 % bis 95 % der Extrusionsbreite liegt. Insbesondere kann die Walzenbreite der Take-Off-Walze an die Folienbreite $B_F$ angepasst sein, sodass die Take-Off-Walze keine, oder nur sehr geringe Walzenränder aufweist, die nicht durch die Folie bedeckt sind. Hierdurch kann das Mitschleppen von Wasser und somit die Spritzwasserbildung signifikant reduziert werden.

Die erfindungsgemäße Cast-Vorrichtung ermöglicht hohe Produktionsgeschwindigkeiten. Insbesondere kann die Kühlwalze dazu eingerichtet sein, mit einer Oberflächengeschwindigkeit von zumindest 120 m/min, oder zumindest 130m/min, oder zumindest 140m/min, oder zumindest 150m/min, oder zumindest 160m/min zu rotieren.

In einem weiteren Aspekt kann die Take-Off-Walze mit einem polymeren Material beschichtet sein, wobei das polymere Material Gummi und/oder zumindest ein Polyhalogenolefin, insbesondere Polytetrafluorethylen, umfasst.

Insbesondere kann das polymeren Material hydrophob sein. Hierdurch wird das Mitschleppen von Wasser weiter reduziert. Eine Oberfläche wird als hydrophob bezeichnet, wenn sie eine kleinere Oberflächenspannung aufweist als Wasser (72 mN/m) oder wenn der Kontaktwinkel mehr als 90° gegenüber Wasser ist.

In einem weiteren Aspekt ist die Take-Off-Walze höhenverstellbar eingerichtet. Durch die Höhenverstellung kann bestimmt werden, ob und wie tief die Take-Off-Walze in das Wasserbad eintaucht. Hierdurch kann die Menge an mitgeschleppten Wasser kontrolliert werden. Es gilt, je weniger die Take-Off-Walze in das Wasserbad eintaucht, desto geringer ist die Menge an mitgeschleppten Wasser.

In einem Aspekt ist die Take-Off-Walze vollständig oberhalb der Wasserlinie des Wasserbads angeordnet. Sie taucht also nicht in das Wasserbad ein. Hierdurch kann das Mitschleppen von Wasser durch die Take-Off-Walze vollständig vermieden werden.

Weiterhin kann die Take-Off-Walze eine innen gekühlte Take-Off-Walze sein. Dies bedeutet, dass die Take-Off-Walze in ihrem Inneren Mittel zur Kühlung umfasst. Beispielsweise kann Kühlwasser oder ein anderes Kühlfluid durch die Take-Off-Walze, insbesondere einen Mantel der Take-Off-Walze geführt werden, um diese zu kühlen. Hierdurch kann - insbesondere wenn die Take-Off-Walze kaum oder nicht ins Wasserbad eintaucht - ein Überhitzen der Walzenoberfläche vermieden werden.

Zudem kann die Take-Off-Walze eine aktiv angetriebene Take-Off-Walze sein. Hierzu kann der Take-Off-Walze ein Antrieb zugeordnet sein. Dieser Antrieb kann so gesteuert oder geregelt sein, dass die Oberflächengeschwindigkeit der Take-Off-Walze der Oberflächengeschwindigkeit der Kühlwalze entspricht. Hierdurch wird verhindert, dass die Folie beim Ablösen von der Kühlwalze gedehnt oder gestaucht wird.

Zudem kann die Cast-Vorrichtung eine Wasserentfernungsvorrichtung umfassen. Die Wasserentfernungsvorrichtung ist dabei vorzugsweise der Kühlwalze zugeordnet und in Umlaufrichtung der Kühlwalze nach der Take-Off-Walze angeordnet. Die Wasserentfernungsvorrichtung stellt sicher, dass die Oberfläche der Kühlwalze frei von Wasser ist, bevor die Kunststoffschmelze erneut auf ihre Oberfläche extrudiert wird.

Die Wasserentfernungsvorrichtung kann mechanische Wasserentfernungselemente, wie Schaber, Rakel oder Abquetschwalzen umfassen.

Alternativ oder zusätzlich kann die Wasserentfernungsvorrichtung zumindest eine Abblasdüse umfassen, welche auf der Oberfläche der Kühlwalze befindliches Wasser abbläst. Die Abblasdüse kann in Form eines Luftrakels ausgebildet sein.

Weiterhin kann die Cast-Vorrichtung zumindest ein Wasserrückhalteelement umfassen. Das Wasserrückhalteelement ist dabei benachbart zur Mantelfläche der Kühlwalze und stirnseitig in Bezug zur Takeoff-Walze angeordnet.

Insbesondere können zumindest zwei Wasserrückhalteelemente vorgesehen sein. Zwischen diesen Wasserrückhalteelementen kann die Takeoff-Walze angeordnet sein.

Das zumindest eine Wasserrückhalteelement ist in einem Bereich benachbart der Mantelfläche der Kühlwalze angeordnet, in welchem die Take-Off-Walze aufgrund der geringeren Walzenbreite der Mantelfläche der Kühlwalze nicht gegenüberliegt.

Insbesondere kann das Wasserrückhalteelement unterhalb des Ablösepunkts der Folie angeordnet sein.

In einem Aspekt umfasst das Wasserrückhalteelement ein Abdeckelement, welches beabstandet zur Mantelfläche der Kühlwalze angeordnet ist, sodass sich ein Spalt zwischen der Mantelfläche der Kühlwalze und dem Abdeckelement ausbildet. Die Spaltbreite kann beispielsweise im Bereich von 0,1 mm bis 10 mm, oder im Bereich von 0,5 mm bis 5 mm oder im Bereich von 1 mm bis 3 mm liegen. Das Abdeckelement verhindert, dass Wasserspritzer, welche z.B. durch von der Kühlwalze mitgeschlepptes Wasser entstehen, auf die freie (d.h. nicht von einer Folie bedeckte) Oberfläche der Kühlwalze gelangen.

Weiterhin kann das zumindest eine Wasserrückhalteelement (insbesondere das Abdeckelement) über eine Stirnseite der Kühlwalze überstehen. Mithin können Wasserspritzer noch effektiver zurückgehalten werden. Optional übergreift das Wasserrückhalteelement (insbesondere das Abdeckelement) auch eine Stirnseite der Kühlwalze. Somit ist nicht nur die Mantelfläche abgedeckt, sondern auch ein Teil der Stirnseite, sodass auch hier Wasserspritzer effektiv zurückgehalten werden können.

In einem weiteren Aspekt steht das zumindest eine Wasserrückhalteelement mit der Mantelfläche der Kühlwalze in Kontakt. Der Kontakt kann über oder unter der Wasserlinie erfolgen. Durch den Kontakt kann die Menge an mitgeschleppten Wasser reduziert werden, wodurch auch die Wasserspritzer reduziert werden können. Der Kontakt kann beispielsweise über ein elastisches Element, wie eine Gummilippe, oder eine Abquetschwalze erfolgen. Entsprechend kann das Wasserrückhalteelement ein elastisches Element, wie eine Gummilippe, eine Abquetschwalze, oder dergleichen umfassen.

Im Falle von einer oder mehreren Abquetschwalzen können diese auf der gleichen Achse wie die Take-Off-Walze gelagert sein, oder integral mit der Abquetschwalze ausgebildet sein. Bei der integralen Ausbildung ist die Mantelfläche der Take-Off-Walze, auf welcher die Folie, geführt wird von der Abquetschwalze abgesetzt, beispielsweise durch einen umlaufenden Rücksprung und/oder durch unterschiedliche Beschichtungen.

Weiterhin kann das zumindest eine Wasserrückhalteelement eine Abblasdüse, insbesondere ein Luftrakel, umfassen. Die Abblasdüse ist dazu eingerichtet, mitgeschlepptes Wasser zumindest von einem Randbereich der Kühlwalze abzublasen.

Weiterhin wir die Aufgabe durch eine Anlage zur Herstellung einer Folie gelöst, wobei die Anlage zumindest einen Extruder und/oder einen Reaktor und die obige Cast-Vorrichtung umfasst. Der Extruder ist dazu eingerichtet, eine Kunststoffschmelze (z.B. PE, PP, PET, ...) an die Extrusionsdüse bereitzustellen, sodass die Kunststoffschmelze auf die Kühlwalze extrudiert wird.

Ein Reaktor ist dazu eingerichtet die Kunststoffschmelze mittels Polymerisation zu erzeugen. Hierzu werden die Monomere (und optional Zusatzstoffe, wie Katalysatoren) in dem Reaktor vermischt und polymerisiert. Die entstehende polymerisierte Kunststoffschmelze kann dann an die Extrusionsdüse bereitgestellt und auf die Kühlwalze extrudiert werden, so dass kein zusätzlicher Extruder benötigt wird.

Weiterhin kann die Anlage eine Reckanlage umfassen, welche der Cast-Vorrichtung nachgeschalten ist, und welche dazu eingerichtet ist, die Folie in Längsrichtung und/oder Querrichtung zu verstrecken. Das Verstrecken in Längs- und Querrichtung kann simultan oder sequenziell erfolgen.

## Kurze Beschreibung der Figuren

Die Erfindung wird nachfolgend anhand der beigefügten Figuren beispielhaft näher erläutert. Hierbei zeigt

Figur 1    eine schematische Darstellung einer Anlage zur Herstellung einer Folie;

Figur 2    eine schematische Darstellung einer Cast-Vorrichtung;

Figur 3    eine weitere Ansicht der Cast-Vorrichtung, und

Figur 4    eine weitere Cast-Vorrichtung.

## Beschreibung der Figuren

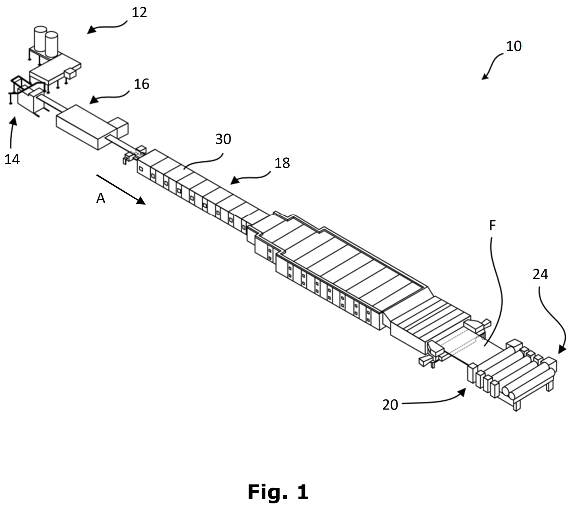

Figur 1 zeigt äußerst schematisch eine Anlage 10 zur Herstellung einer Folie F, die mehrere verschiedene Vorrichtungen und Anlagen umfasst.

Im gezeigten Beispiel weist die Anlage 10 eine Extrusionsanlage 12, eine Cast-Vorrichtung 14, zumindest eine Längsreckanlage 16 (MDO, "Machine Direction Orienter"), eine Querreckanlage 18 (TDO, "Transverse Direction Orienter"), eine optionale Behandlungsvorrichtung 20 sowie eine Wickelvorrichtung 24 auf.

Die optionale Behandlungsvorrichtung 20 kann eine separate Baugruppe sein, oder beispielsweise in Wickelvorrichtung 24 integriert sein.

Die Extrusionsanlage 12 weist zumindest einen Extruder 120 auf und ist dazu eingerichtet, aus wenigstens einem Ausgangsprodukt eine Schmelze zu erzeugen. Das Ausgangsprodukt kann beispielsweise Kunststoffgranulat, Kunststoffpulver, Kunststoffrezyklat, Zusatzstoffe und/oder dergleichen umfassen.

Der zumindest eine Extruder kann ein Einschneckenextruder, ein Kaskadenextruder, ein Doppelschneckenextruder, ein Planetwalzenextruder und/oder dergleichen sein. Denkbar ist auch, dass andere Misch- und Aufbereitungsaggregate, wie z.B. ein Ko-Kneter verwendet werden.

Mittels einer Extrusionsdüse, wie beispielswiese einer Breitschlitzdüse 126 wird die erzeugte Schmelze auf eine Kühlwalze 142 der Cast-Vorrichtung 14 aufgetragen, wodurch eine Folie F erzeugt wird. Die Kühlwalze 142 kann beispielsweise mit einer Geschwindigkeit (gemessen auf der Kühlwalzenoberfläche) von zumindest 120 m/min, oder zumindest 130 m/min, oder zumindest 140 m/min, oder zumindest 150 m/min oder zumindest 160 m/min rotieren.

Ebenso ist es möglich, die Kunststoffschmelze mittels Polymerisation zu erzeugen. Hierzu werden die Monomere (und optional Zusatzstoffe, wie Katalysatoren) in einem Reaktor und/oder einem Extruder vermischt und polymerisiert. Die entstehende polymerisierte Kunststoffschmelze kann dann direkt über die Extrusionsdüse 126 auf die Kühlwalze 142 der Cast-Vorrichtung 14 aufgetragen werden, wodurch eine Folie F erzeugt wird.

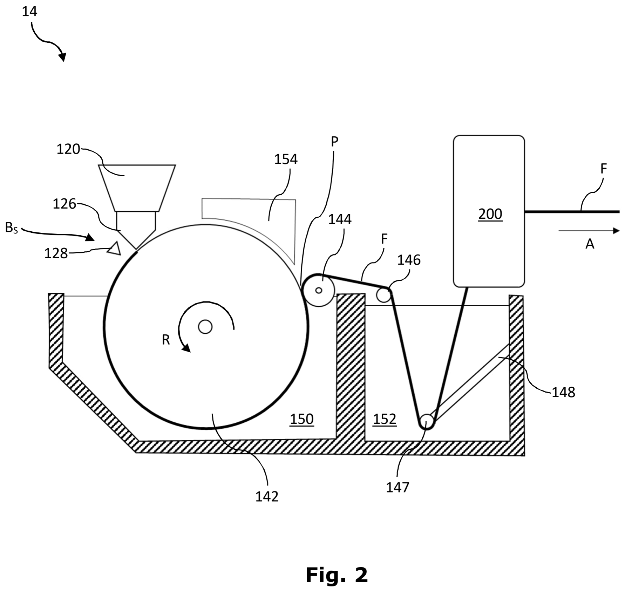

Optional ist eine sogenannte Anlegevorrichtung 128 vorgesehen (s. Fig. 2), mit welcher die aus der Extrusionsdüse austretende Schmelze präzise auf die Kühlwalze aufgelegt werden und dort fixiert werden kann. Die Anlegevorrichtung 128 umfasst beispielsweise ein Luftrakel (z.B. ein Airknife) und/oder eine sogenannte Pinning-Elektrode. Das präzise Auflegen führt zu einer gleichmäßigen Abkühlung und qualitativ hochwertigen Oberfläche der Folie.

Die extrudierte Folie F kann eine oder mehrere Lagen aufweisen. Denkbar ist bei einer mehrlagigen Folie, dass ein Extruder mehrere oder alle Lagen erzeugt, oder dass für jede Lage ein Extruder vorgesehen ist.

Nach dem Durchlaufen der Cast-Vorrichtung 14 wird die Folie F im hier gezeigten Beispiel einer Längsreckanlage 16 zugeführt. In dieser wird die Folie in einer ersten Richtung, d.h. in der Abzugsrichtung A, verstreckt und mithin gelängt. Nach dem Durchlaufen der Längsreckanlage kann die Folie (abhängig vom Längsreckverhältnis, welches typsicherweise im Bereich von 3 bis 5 liegt) beispielsweise eine Foliengeschwindigkeit von zumindest 600 m/min, oder zumindest 700 m/min oder zumindest 800 m/min aufweisen.

Die sich anschließende Querreckanlage 18, wie sie beispielsweise in der DE 10 2021 128 332 A1 beschrieben ist, hat entlang der üblichen Bewegungs- bzw. Abzugsrichtung A der Anlage 10 einen Ofen 30 mit verschiedenen Zonen zur Temperierung der Folie F. Im Ofen 30 wird die Folie F in an sich bekannter Weise in Querrichtung, d.h. quer zur Abzugsrichtung A, gereckt. Mithin ist die Herstellung einer mono- oder biaxial orientierten Folie möglich.

Anstelle von zwei separaten Reckanlagen 16, 18 zur Längsreckung und Querreckung kann auch eine Simultanreckanlage genutzt werden. In dieser erfolgt die Verstreckung der Folie in Längs- und Querrichtung gleichzeitig.

Die Behandlungsvorrichtung 20 ist beispielsweise eine Vorrichtung zur Aktivierung der Oberfläche der Folie F durch eine Coronabehandlung, beispielsweise um eine bessere Metallhaftung zu realisieren.

Die Wickelvorrichtung 24 dient zum Aufwickeln der erzeugten Folie F und ist die in Abzugsrichtung A letzte Vorrichtung. Sie weist eine Wickelhülse auf, auf der die Folie F aufgewickelt wird.

In Figur 2 ist die Cast-Vorrichtung 14 in einer vergrößerten, schematischen Ansicht dargestellt.

Die hier gezeigte Cast-Vorrichtung 14 umfasst die Breitschlitzdüse 126, die Kühlwalze 142 sowie eine Anlegevorrichtung 128.

Die Breitschlitzdüse 126 ist oberhalb der Kühlwalze 142 angeordnet und dazu ausgebildet, die Kunststoffschmelze kontinuierlich auf die Kühlwalze 142 aufzutragen, die die Folie F bildet. Der Auftrag der Kunststoffschmelze erfolgt mit einer Extrusionsbreite $B_S$. Der verwendete Kunststoff ist insbesondere ein Polyethylen (PE), ein Polypropylen (PP), ein Polyethylenterephthalat (PET), und/oder dergleichen. Es ist auch möglich, unterschiedliche Kunststoffe zu kombinieren. Insbesondre kann eine Folie unterschiedliche Kunststofflagen aufweisen und/oder in einer Lage können unterschiedliche Kunststoffe co-extrudiert sein.

Die Folie F wird dann mittels der Anlegevorrichtung 128 an die Kühlwalze 142 gleichmäßig angelegt. Die Kühlwalze 142 dreht sich dabei in der Ansicht gemäß Figur 2 entgegen dem Uhrzeigersinn (Rotationsrichtung R). Die auf diese Weise erzeugte Folie F wird schließlich, im gezeigten Ausführungsbeispiel nach etwa einer dreiviertel Drehung der Kühlwalze 142, von der Kühlwalze 142 abgelöst, abgekühlt und einer Reckanlage 16, 18 zugeführt.

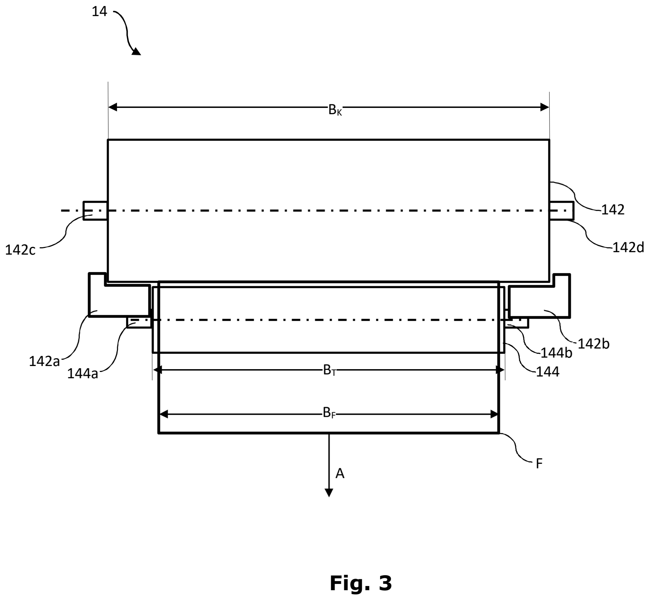

Beim Abkühlen der Kunststoffschmelze kommt es - je nach verwendetem Material - zu dem sogenannten Neck-In. Die Breite der Folie reduziert sich mithin durch das Abkühlen von $B_S$ auf die Folienbreite $B_F$ (s. Fig. 3).

Zum Ablösen der Folie F von der Kühlwalze 142 umfasst die Cast-Vorrichtung 14 eine Take-Off-Walze 144, welcher mehrere Umlenkwalzen 146, 147 nachgeschalten sind. Die Umlenkwalze 147 ist an einem Spannelement 148 angeordnet. Das Spannelement ist hier als verschwenkbarer Hebel ausgeführt. Über die Winkelstellung des Hebels kann eine Spannung der Folie F eingestellt oder geregelt werden.

Wie gezeigt, kann die Kühlwalze 142 in einem ersten Wasserbad angeordnet sein, um die extrudierte Folie F und die Kühlwalze 142 zu kühlen. Nach der Take-Off-Walze 144, welche dazu dient die extrudierte Folie F von der Kühlwalze 142 abzulösen, kann die Folie F mittels der Umlenkwalzen 146, 147 durch ein weiteres Wasserbad 152 geführt werden, um eine weitere Abkühlung zu erreichen.

Die Take-Off-Walze 144 kann wie im gezeigten Ausführungsbeispiel teilweise im Wasserbad 150 angeordnet sein, wobei sich der Ablösepunkt P oberhalb der Wasserlinie befindet.

Ebenso ist es möglich die Take-Off-Walze 144 so anzuordnen, dass sie außerhalb des Wasserbades 150, d.h. vollständig oberhalb der Wasserlinie, liegt. In dieser alternativen Ausführungsform ist die Take-Off-Walze 144 vorzugsweise gekühlt. Hierzu kann Kühlwasser oder ein anderes Kühlfluid durch die Take-Off-Walze, insbesondere einen Mantel der Walze geführt werden.

Ebenso ist es möglich, dass die Take-Off-Walze 144 eine aktivangetriebene Walze ist. Hierzu kann der Take-Off-Walze 144 ein Antrieb zugeordnet sein (nicht dargestellt).

Zudem ist es möglich, dass die Take-Off-Walze 144 höhenverstellbar eingerichtet ist. Dies ermöglicht es, die Take-Off-Walze 144 unterschiedlich tief (oder gar nicht) in das Wasserbad 150 eintauchen zu lassen.

Bevor die Folie F einer Längs-, Quer- oder Simultanreckanlage 16, 18 zugeführt wird, durchläuft sie typischerweise eine Wasserentfernungsvorrichtung 200. In dieser Wasserentfernungsvorrichtung 200 kann an der Folie anhaftendes Wasser abgeblasen, mechanisch abgestreift und/oder auf sonstige Weise entfernt werden.

Zudem kann die Cast-Vorrichtung 14 eine Wasserentfernungsvorrichtung 154 umfassen. Die Wasserentfernungsvorrichtung 154 ist, wie in Figur 2 gezeigt, der Kühlwalze 142 zugeordnet und in Umlaufrichtung R der Kühlwalze 142 nach der Take-Off-Walze 144 angeordnet. Die Wasserentfernungsvorrichtung 154 stellt sicher, dass die Oberfläche der Kühlwalze frei von Wasser ist, bevor erneut Kunststoffschmelze auf ihre Oberfläche extrudiert wird.

Figur 3 zeigt eine schematische Draufsicht der Cast-Vorrichtung 14. Wie gezeigt ist, weist die Kühlwalze 142 eine Walzenbreite $B_K$ und die Take-Off-Walze 144 eine geringere Walzenbreite $B_T$ auf. Die Walzenbreite $B_T$ der Take-Off-Walze liegt im gezeigten Beispiel im Bereich von 70 % bis 100 % der Extrusionsbreite $B_S$ und entspricht damit in etwa der Folienbreite $B_F$.

Die Kühlwalze 142 weist optional Achsstummel 142c, 142d auf, die der Lagerung der Kühlwalze dienen. Entsprechend kann die Take-Off-Walze 144 Achsstummel 144a, 144b aufweisen, die der Lagerung der Take-Off-Walze dienen. Diese Achsstummel haben keinen Einfluss auf die Walzenbreite $B_K$ der Kühlwalze bzw. die Walzenbreite $B_T$ der Take-Off-Walze, denn Die Walzenbreite gibt die Breite (in Axialrichtung der Walze gemessen) der Mantelfläche der Walze an, auf welcher die Schmelze, respektive die Folie, geführt wird.

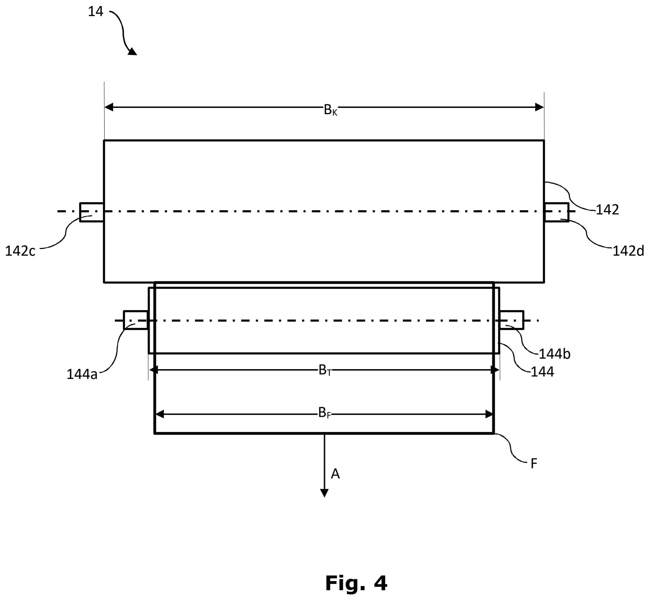

Links und rechts der Take-Off-Walze sind im gezeigten Ausführungsbeispiel Wasserrückhalteelemente 142a, 142b angeordnet. Die Wasserrückhalteelemente 142a, 142b sind optional, wie die in Figur 4 gezeigte Ausführungsform verdeutlicht.

Das Wasserrückhalteelement 142a, welches ein Abdeckelement umfasst bzw. als Abdeckelement ausgebildet ist, ist benachbart zur Mantelfläche der Kühlwalze 142 und stirnseitig in Bezug zur Take-Off-Walze 144 links angeordnet. Das Wasserrückhalteelement 142b, welches ein Abdeckelement umfasst bzw. als Abdeckelement ausgebildet ist, ist benachbart zur Mantelfläche der Kühlwalze 142 und stirnseitig in Bezug zur Take-Off-Walze 144 rechts angeordnet. Die Wasserrückhalteelemente 142a, 142b verhindern, dass Wasserspritzer auf die freie Oberfläche der Kühlwalze gelangen können.

Wie zudem gezeigt ist, stehen die Wasserrückhalteelemente 142a, 142b links bzw. rechts über die jeweilige Stirnseite der Kühlwalze 142 über, und übergreifen die jeweilige Stirnseite der Kühlwalze 142 zumindest teilweise.

Figur 4 zeigt eine schematische Draufsicht einer weiteren Cast-Vorrichtung 14. Diese entspricht der Cast-Vorrichtung aus Figur 3. Jedoch sind keine Wasserrückhalteelemente vorgesehen.

**Bezugszeichenliste**

| | |
|---|---|
| 10 | Anlage zur Herstellung einer Folie F |
| 12 | Extrusionsanlage |
| 14 | Cast-Vorrichtung |
| 16 | Längsreckanlage |
| 18 | Querreckanlage |
| 20 | Behandlungsvorrichtung |
| 24 | Wickelvorrichtung |
| 30 | Ofen |
| | |
| 120 | Extruder |
| 126 | Breitschlitzdüse |
| 128 | Anlegevorrichtung |
| | |
| 142 | Kühlwalze |
| 142a | Wasserrückhalteelement |
| 142b | Wasserrückhalteelement |
| 142c | Achsstummel |
| 142d | Achsstummel |
| 144 | Take-Off-Walze |
| 144a | Achsstummel |
| 144b | Achsstummel |
| 146 | Umlenkwalze |
| 147 | Umlenkwalze |
| 148 | Spannelement |
| 150 | Wasserbad |
| 152 | Wasserbad |
| 154 | Wasserentfernungsvorrichtung für die Kühlwalze |
| 200 | Wasserentfernungsvorrichtung für die Folie |
| | |
| A | Abzugsrichtung |
| F | Folie |
| R | Rotationsrichtung |
| P | Ablösepunkt |

**Patentansprüche**

1. Cast-Vorrichtung (14) zur Kunststofffolienherstellung, wobei

   die Cast-Vorrichtung eine Kühlwalze (142), eine Take-Off-Walze (144) und ein Wasserbad (150) umfasst, wobei die Kühlwalze (142) dazu eingerichtet ist, eine auf ihre Oberfläche extrudierte Kunststoffschmelze abzukühlen um eine Folie (F) zu erzeugen, wobei
   die Take-Off-Walze (144) der Kühlwalze (142) nachgeschalten ist und dazu eingerichtet ist, die Folie (F) von der Kühlwalze (142) abzulösen, und wobei
   die Kühlwalze (142) zumindest teilweise in dem Wasserbad (150) angeordnet ist, und wobei
   die Kühlwalze (142) eine Walzenbreite ($B_K$) und die Take-Off-Walze (144) eine Walzenbreite ($B_T$) aufweist, wobei die Walzenbreite ($B_T$) der Take-Off-Walze (144) kleiner ist, als die Walzenbreite ($B_K$) der Kühlwalze (142).

2. Die Cast-Vorrichtung (14) nach Anspruch 1, wobei die Cast-Vorrichtung (14) eine Extrusionsdüse (126) umfasst, welche dazu eingerichtet ist, die Kunststoffschmelze auf die Oberfläche der Kühlwalze (142) mit einer Extrusionsbreite ($B_S$) zu extrudieren, und wobei
   die Walzenbreite ($B_T$) der Take-Off-Walze (144) im Bereich von 70 % bis 105 % der Extrusionsbreite ($B_S$), oder im Bereich von 75% bis 100% der Extrusionsbreite ($B_S$), oder im Bereich von 80 % bis 95 % der Extrusionsbreite ($B_S$) liegt.

3. Cast-Vorrichtung (14) nach Anspruch 1 oder 2, wobei die Kühlwalze (142) dazu eingerichtet ist mit einer Oberflächengeschwindigkeit von zumindest 120 m/min, oder zumindest 130 m/min, oder zumindest 140 m/min, oder zumindest 150 m/min oder zumindest 160 m/min zu rotieren.

4. Cast-Vorrichtung (14) nach einem der Ansprüche 1 bis 3, wobei die Take-Off-Walze (144) mit einem polymeren Material beschichtet ist, wobei das polymere Material Gummi und/oder zumindest ein Polyhalogenolefin, insbesondere Polytetrafluorethylen, umfasst.

5. Cast-Vorrichtung (14) nach einem der Ansprüche 1 bis 4, wobei die Take-Off-Walze (144) höhenverstellbar eingerichtet ist.

6. Cast-Vorrichtung (14) nach einem der Ansprüche 1 bis 5, wobei die Take-Off-Walze (144) vollständig oberhalb der Wasserlinie des Wasserbads (150) angeordnet ist.

7. Cast-Vorrichtung (14) nach einem der Ansprüche 1 bis 6, wobei ein Ablösepunkt (P) der Folie (F) von der Kühlwalze (142) oberhalb der Wasserlinie des Wasserbads (150), auf Höhe der Wasserlinie des Wasserbads (150), oder unterhalb der Wasserlinie des Wasserbads (150) liegt.

8. Cast-Vorrichtung (14) nach einem der Ansprüche 1 bis 7, wobei die Take-Off-Walze (144) eine aktiv angetriebene Take-Off-Walze (144) ist.

9. Cast-Vorrichtung (14) nach einem der Ansprüche 1 bis 8, wobei die Cast-Vorrichtung (14) weiterhin eine Wasserentfernungsvorrichtung (154) umfasst, wobei
   die Wasserentfernungsvorrichtung (154) der Kühlwalze (142) zugeordnet und in Umlaufrichtung der Kühlwalze (142) nach der Take-Off-Walze (144) angeordnet ist.

10. Cast-Vorrichtung (14) nach einem der Ansprüche 1 bis 9, wobei die Cast-Vorrichtung (14) zumindest ein Wasserrückhalteelement (142a, 142b) umfasst, wobei das Wasserrückhalteelement (142a, 142b) benachbart zur Mantelfläche der Kühlwalze (142) und stirnseitig in Bezug zur Takeoff-Walze (144) angeordnet ist.

11. Cast-Vorrichtung (14) nach einem der Ansprüche 1 bis 10, wobei das zumindest ein Wasserrückhalteelement (142a, 142b) über eine Stirnseite der Kühlwalze (142) übersteht.

12. Cast-Vorrichtung (14) nach Anspruch 11, wobei das zumindest ein Wasserrückhalteelement (142a, 142b) die Stirnseite der Kühlwalze (142) zumindest teilweise übergreift.

13. Cast-Vorrichtung (14) nach einem der Ansprüche 1 bis 12, wobei das zumindest ein Wasserrückhalteelement (142a, 142b) eine Abblasdüse umfasst, welche dazu eingerichtet ist, mitgeschlepptes Wasser von einem Randbereich der Kühlwalze (142) abzublasen.

14. Anlage (10) zur Herstellung einer Folie (F), wobei die Anlage (10) zumindest einen Extruder (12) und/oder einen Reaktor sowie die Cast-Vorrichtung (14) nach einem der vorhergehenden Ansprüche 2 bis 13 umfasst, und wobei der Extruder (12) oder der Reaktor dazu eingerichtet ist, eine Kunststoffschmelze an die Extrusionsdüse (126) bereitzustellen.

15. Anlage (10) zur Herstellung einer Folie (F) nach dem vorhergehenden Anspruch, wobei die Anlage (10) weiterhin eine Reckanlage (16, 18) umfasst, welche der Cast-Vorrichtung (14) nachgeschalten ist, und welche dazu eingerichtet ist, die Folie (F) in Längsrichtung und/oder Querrichtung zu verstrecken.

**Fig. 1**

**Fig. 2**

**Fig. 3**

**Fig. 4**

**Europäisches Patentamt**
**European Patent Office**
**Office européen des brevets**

# EUROPÄISCHER RECHERCHENBERICHT

Nummer der Anmeldung

EP 25 21 4128

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 1 225 848 A (KALLE AG) 24. März 1971 (1971-03-24) | 1,2,6-8 | INV. B29C48/08 |
| Y | * Seite 1, Zeile 10 - Zeile 20; Abbildungen 1-2 * | 3-5,9-13 | B29C48/88 |
| | * Seite 2, Zeile 122 - Seite 3, Zeile 17 * | | ADD. |
| | * Seite 4, Zeile 9 - Zeile 30 * ----- | | B29C48/00 B29C48/305 |
| Y | JP S51 41053 A (ICI LTD) 6. April 1976 (1976-04-06) * Beschreibungsabsatz fängt mit "During operation..." * ----- | 3 | B29C48/50 |
| Y | US 5 674 442 A (MORITA KEITA [JP]) 7. Oktober 1997 (1997-10-07) * Anspruch 8 * * Spalte 5, Zeile 24 - Zeile 28 * ----- | 4 | |
| Y | DE 25 07 437 A1 (WOYWOD KUNSTSTOFFMASCHINEN GMB) 26. August 1976 (1976-08-26) * Seite 9; Abbildung 1 * ----- | 5 | |
| | | | RECHERCHIERTE SACHGEBIETE (IPC) |
| Y | CN 203 527 865 U (GUILIN ELECTRICAL EQUIPMENT SCIENTIFIC RES INST) 9. April 2014 (2014-04-09) * Abbildung 1+ Beschreibung * ----- | 9 | B29C B29L |
| Y | EP 0 862 982 B1 (DORNIER GMBH LINDAUER [DE]) 27. Juni 2001 (2001-06-27) * Absatz [0016]; Abbildung 1 * ----- | 9 | |
| Y | CN 204 123 653 U (TIANJIN TIANSU SPECIAL MASTER BATCH CO LTD) 28. Januar 2015 (2015-01-28) * Abbildung 1 * ----- | 10-13 | |
| A | CN 201 895 407 U (ANHUI GUOFENG PLASTIC CO LTD) 13. Juli 2011 (2011-07-13) * das ganze Dokument * ----- | 1-15 | |

Der vorliegende Recherchenbericht wurde für alle Patentansprüche erstellt

| Recherchenort | Abschlußdatum der Recherche | Prüfer |
|---|---|---|
| München | 17. März 2026 | Paulme, Camille |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 21 4128

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-03-2026

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| GB 1225848 | A | | 24-03-1971 | BE | 725485 | A | 13-06-1969 |
| | | | | FR | 1594409 | A | 01-06-1970 |
| | | | | GB | 1225848 | A | 24-03-1971 |
| | | | | JP | S5113496 | B1 | 30-04-1976 |
| | | | | LU | 57522 | A1 | 11-06-1970 |
| JP S5141053 | A | | 06-04-1976 | AU | 8318875 | A | 20-01-1977 |
| | | | | BE | 832225 | A | 09-02-1976 |
| | | | | DE | 2535330 | A1 | 19-02-1976 |
| | | | | FR | 2281206 | A1 | 05-03-1976 |
| | | | | GB | 1469983 | A | 14-04-1977 |
| | | | | IT | 1040269 | B | 20-12-1979 |
| | | | | JP | S5141053 | A | 06-04-1976 |
| | | | | JP | S5522257 | B2 | 16-06-1980 |
| | | | | LU | 73161 | A1 | 07-01-1977 |
| | | | | NL | 7509254 | A | 10-02-1976 |
| | | | | US | 4038354 | A | 26-07-1977 |
| US 5674442 | A | | 07-10-1997 | EP | 0687545 | A1 | 20-12-1995 |
| | | | | JP | 3554570 | B2 | 18-08-2004 |
| | | | | JP | H06166089 | A | 14-06-1994 |
| | | | | KR | 960700879 | A | 24-02-1996 |
| | | | | US | 5674442 | A | 07-10-1997 |
| | | | | WO | 9518004 | A1 | 06-07-1995 |
| DE 2507437 | A1 | | 26-08-1976 | KEINE | | | |
| CN 203527865 | U | | 09-04-2014 | KEINE | | | |
| EP 0862982 | B1 | | 27-06-2001 | AT | E202511 | T1 | 15-07-2001 |
| | | | | DE | 19709138 | A1 | 17-09-1998 |
| | | | | EP | 0862982 | A1 | 09-09-1998 |
| | | | | ES | 2159898 | T3 | 16-10-2001 |
| | | | | JP | 2930928 | B2 | 09-08-1999 |
| | | | | JP | H10244577 | A | 14-09-1998 |
| | | | | US | 6036465 | A | 14-03-2000 |
| CN 204123653 | U | | 28-01-2015 | KEINE | | | |
| CN 201895407 | U | | 13-07-2011 | KEINE | | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102021128332 A1